(19) Europäisches Patentamt
European Patent Office
Office européen des brevets

(11) Veröffentlichungsnummer: **0 318 430 A2**

(12) **EUROPÄISCHE PATENTANMELDUNG**

(21) Anmeldenummer: **88810783.6**

(22) Anmeldetag: **16.11.88**

(51) Int. Cl.[4]: **C 08 G 75/14**

(30) Priorität: **23.11.87 CH 4550/87**

(43) Veröffentlichungstag der Anmeldung: **31.05.89 Patentblatt 89/22**

(84) Benannte Vertragsstaaten: **CH DE FR GB IT LI NL**

(71) Anmelder: **CIBA-GEIGY AG**
**Klybeckstrasse 141**
**CH-4002 Basel (CH)**

(72) Erfinder: **Hunziker, Max, Dr.**
**Chasseralstrasse 8**
**CH-3186 Düdingen (CH)**

(54) **Poly(arylendisulfide).**

(57) In organischen Lösungsmitteln unlösliche Poly(arylendisulfide), enthaltend, bezogen auf die Gesamtmenge der im Poly(arylendisulfid) wiederkehrenden Strukturelemente, 100 bis 50 Mol% des wiederkehrenden Strukturelementes der Formel I

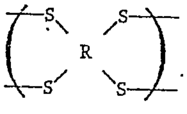

(I)

und 50 bis 0 Mol% des wiederkehrenden Strukturelementes der Formel II $-(S-R'-S)-$ (II),
worin R einen der folgenden Reste bedeutet

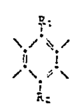 , 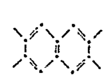 , 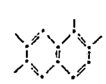 , 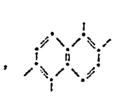 ,

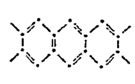 , 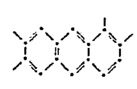 , 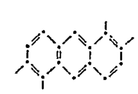 ,

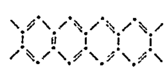 , 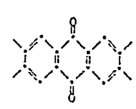 , 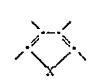 ,

oder 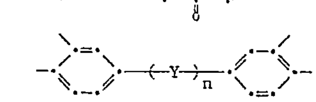 und

R′ für einen Rest der Formeln

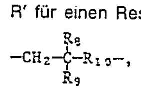 , 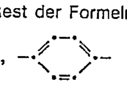 oder 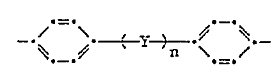

steht, worin $R_1$ und $R_2$ unabhängig voneinander je für -H, $C_1$-$C_{20}$-Alkyl, Aryl mit bis zu 12 C-Atomen, Aralkyl mit bis zu 20 C-Atomen, Alkaryl mit bis zu 20 C-Atomen, -CN, -$OCOR_3$, -OH oder -$SR_4$ stehen, worin $R_3$ und $R_4$ unabhängig voneinander je

EP 0 318 430 A2

ein $C_1$-$C_{20}$-Alkyl oder Aryl mit bis zu 12 C-Atomen bedeuten, X für $\rangle NH$, $\rangle NR_5$, -S- oder -O-steht, worin $R_5$ ein $C_1$-$C_{20}$-Alkyl oder ein Aryl mit bis zu 12 C-Atomen bedeutet, n für Null ode eine Zahl von 1 bis 20 steht, wobei, wenn n für 1 steht, Y einen Rest der Formel

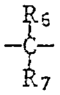 ,

-$SO_2$- oder Phenylen bedeutet, und, wenn n für eine Zahl von 2 bis 20 steht, Y einen Rest der Formel

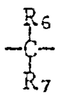

bedeutet, worin $R_6$ und $R_7$ unabhängig voneinander je für -H, $C_1$-$C_{20}$-Alkyl, Aryl mit bis zu 12 C-Atomen, Aralkyl oder Alkaryl mit bis zu 20 C-Atomen stehen, $R_8$ und $R_9$ unabhängig je für ein -H oder $C_1$-$C_6$-Alkyl stehen, $R_{10}$ einen der Reste $-(CH_2)_p-$ oder $-[O-(CH_2)_q]_r-$ bedeutet, worin p für Null oder eine Zahl von 1 bis 18, q für eine Zahl von 2 bis 6 und r für Null oder eine Zahl von 1 bis 6 stehen, können nach der Dotierung mit Oxidationsmitteln, wie beispielsweise Brom, $SbF_5$, $SbCl_5$, $AsF_5$ oder $PF_5$, als elektrisch leitende Polymere eingesetzt werden.

## Beschreibung

### Poly(arylendisulfide)

Die vorliegende Erfindung betrifft in organischen Lösungsmitteln unlösliche Poly(arylendisulfide), Verfahren zu ihrer Herstellung und deren Verwendung in dotierter Form als elektrisch leitende Polymere.

Aus Makromolekulare Chemie 119 (1968), Seiten 249-251, und aus dem US-Patent 3,522,312 ist es bekannt, durch Erhitzen von Dithiolen in Gegenwart von Dialkylsulfoxid als Oxidationsmittel aliphatische oder aliphatisch-cycloaliphatische Polydisulfide herzustellen.

Im US-Patent 3,400,104 wird die Herstellung von aliphatischen Polydisulfiden beschrieben, wobei Alkalitetrathiocarbonate mit einem aliphatischen Dihalogenid in stöchimetrischen Mengen umgesetzt werden.

In Makromolekulare Chemie 176 (1975), Seiten 9-21, wird unter anderem auch die Herstellung von aromatischen Polydisulfiden offenbart, worin die aromatischen Ringe bzw. Ringsysteme nur über eine Disulfidbrücke miteinander verbunden sind.

Die DE-OS 33 24 768 beschreibt ein Verfahren zur Herstellung von elektrisch leitfähigen Polymeren, wobei man in erster Stufe ein hochmolekulares Reaktionsprodukt herstellt, indem man einen Aromaten enthaltend 2 bis 9 carbocyclische Ringe und gegebenenfalls heterocyclische Ringe mit Schwefel, einem schwefelspendenden Agens, Selen oder Mischungen davon umsetzt. Hinweise, dass sich nach diesem Verfahren zwischen den Aromaten Disulfidbrücken bilden, fehlen in der genannten DE-OS.

Es wurde nun gefunden, dass man durch Oxidation von aromatischen Tetramercaptoverbindungen oder von Mischungen aus aromatischen Tetramercaptoverbindungen mit aromatischen oder aliphatischen Dimercaptoverbindungen mit Dialkylsulfoxiden sehr reine Polymere mit hohem Polymerisationsgrad erhält, die sich im Vergleich zu den literaturbekannten Polysulfiden zu elektrisch leitfähigen Polymeren dotieren lassen.

Gegenstand vorliegender Erfindung sind somit in organischen Lösungsmitteln unlösliche Poly(arylendisulfide), enthaltend, bezogen auf die Gesamtmenge der im Poly(arylendisulfid) wiederkehrenden Strukturelemente, 100 bis 50 Mol% des wiederkehrenden Strukturelementes der Formel I

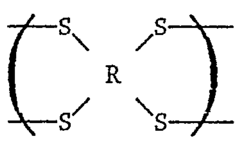

(I)

und 50 bis 0 Mol% des wiederkehrenden Strukturelementes der Formel II

$+S-R'-S+$ (II),

worin R einen der folgenden Reste bedeutet

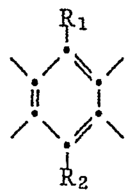, 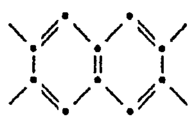, 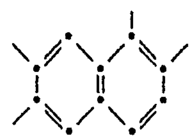, 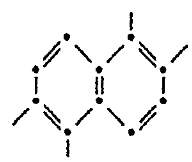,

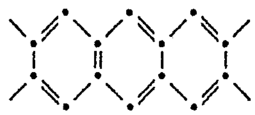, 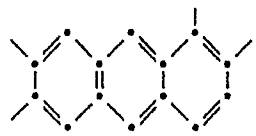, 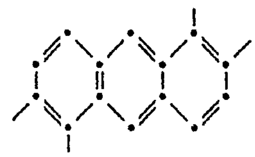,

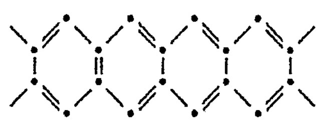, 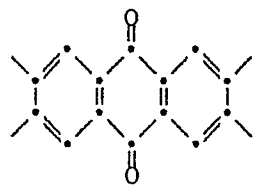, 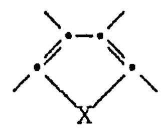,

oder 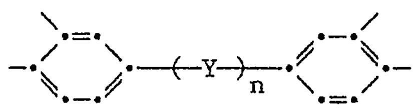 und

R′ für einen Rest der Formeln

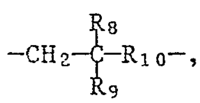, 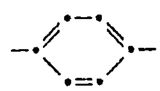 oder 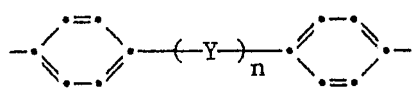

steht, worin $R_1$ und $R_2$ unabhängig voneinander je für -H, $C_1$-$C_{20}$-Alkyl, Aryl mit bis zu 12 C-Atomen, Aralkyl mit bis zu 20 C-Atomen, Alkaryl mit bis zu 20 C-Atomen, -CN, $-OCOR_3$, OH oder $-SR_4$ stehen, worin $R_3$ und $R_4$ unabhängig voneinander je ein $C_1$-$C_{20}$-Alkyl oder Aryl mit bis zu 12 C-Atomen bedeuten, X für $>$NH, $>NR_5$, -S- oder -O-steht, worin $R_5$ ein $C_1$-$C_{20}$-Alkyl oder ein Aryl mit bis zu 12 C-Atomen bedeutet, n für Null oder eine Zahl von 1 bis 20 steht, wobei, wenn n für 1 steht, Y einen Rest der Formel

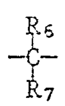,

$-SO_2-$ oder Phenylen bedeutet, und, wenn n für eine Zahl von 2 bis 20 steht, Y einen Rest der Formel

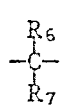

bedeutet, worin $R_6$ und $R_7$ unabhängig voneinander je für -H, $C_1$-$C_{20}$-Alkyl, Aryl mit bis zu 12 C-Atomen, Aralkyl oder Alkaryl mit bis zu 20 C-Atomen stehen, $R_8$ und $R_9$ unabhängig je für ein -H oder $C_1$-$C_6$-Alkyl stehen, $R_{10}$ einen der Reste $-(CH_2)_p-$ oder $-[O-(CH_2)_q]_r-$ bedeutet, worin p für Null oder eine Zahl von 1 bis 18, q für eine Zahl von 2 bis 6 und r für Null oder eine Zahl von 1 bis 6 stehen.

Vorzugsweise bedeutet R in Formel I einen Rest der Formeln

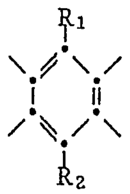

oder

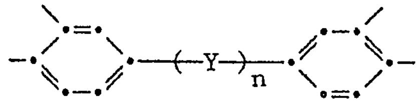

,

worin $R_1$ und $R_2$ unabhängig voneinander je für -H, ein $C_1$-$C_4$-Alkyl oder einen Rest -$OCOR_3$ stehen, wobei $R_3$ ein $C_1$-$C_{20}$-Alkyl bedeutet, n für Null oder die Zahl 1 steht und Y p-Phenylen oder Methylen bedeutet.

Insbesondere bedeutet R in Formel I einen Rest der Formeln

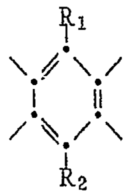

oder

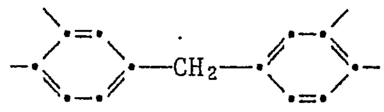

,

worin $R_1$ und $R_2$ unabhängig voneinander je für -H, Methyl oder Isopropyl stehen.

Bedeutet R in der Formel I einen der oben angegebenen Reste mit einem kondensierten Ringsystem, so können diese Reste gegebenenfalls ebenfalls mit einem oder mehreren Substituenten $R_1$ bzw. $R_2$ substituiert sein, die bis auf ein Wasserstoffatom die zuvor genannte Bedeutung haben.

In der Formel II bedeutet R′ vorzugsweise einen aromatischen Rest der angegebenen Formeln, insbesondere steht R′ für den p-Phenylenrest.

Bedeutet R′ einen aliphatischen Rest der Formel

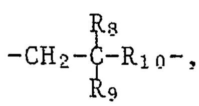

so bedeuten darin $R_8$ und $R_9$ vorzugsweise je ein Wasserstoffatom und $R_{10}$ vorzugsweise einen Rest der Formel $-(CH_2)-_p$, worin p vorzugsweise für eine Zahl von 2 bis 10 steht.

Bedeuten $R_1$, $R_2$, $R_3$, $R_4$, $R_5$, $R_6$, $R_7$, $R_8$ und $R_9$ je ein Alkyl, so kann dieses geradkettig oder verzweigt sein. Geeignete Alkyle sind beispielsweise Methyl, Ethyl, Isopropyl, n-Butyl, Isopentyl, n-Heptyl, 2-Ethylhexyl, n-Decyl oder n-Dodecyl.

Wenn $R_1$, $R_2$, $R_3$, $R_4$, $R_5$, $R_6$ und $R_7$ je für ein Aryl stehen, so kann es sich beispielsweise um Phenyl, Naphthyl oder Biphenyl handeln.

Bedeuten $R_1$, $R_2$, $R_6$ und $R_7$ je ein Aralkyl, so kann dieser Rest beispielsweise Benzyl, Phenylethyl oder Phenylpropyl sein.

Stellen $R_1$, $R_2$, $R_6$ und $R_7$ je ein Alkaryl dar, so ist dieser Rest beispielsweise ein Tolyl, Xylyl, Ethylphenyl, Propylphenyl, Cumyl, tert.-Butylphenyl, n-Butylphenyl, n-Hexylphenyl oder N-Dodecylphenyl.

Vorzugsweise enthalten die erfindungsgemäßen Poly(arylendisulfide) 100 bis 75 Mol% des wiederkehrenden Strukturelementes der Formel I und 25 bis 0 Mol% des wiederkehrenden Strukturelementes der Formel II. Insbesondere enthalten die erfindungsgemässen Poly(arylendisulfide) 100 Mol% des wiederkehrenden Strukturelementes der Formel I.

Die erfindungsgemässen Poly(arylendisulfide), enthaltend die Strukturelemente der Formeln I und II in bestimmten Mengen, können hergestellt werden, indem man entweder Tetramercaptoverbindungen der Formel III

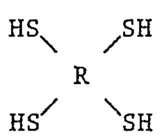

(III)

oder ein Gemisch aus einer Tetramercaptoverbindung der Formel III mit einer darin bis zu 50 Mol% enthaltenen Dimercaptoverbindung der Formel IV

HS−R′−SH (IV),

worin R und R′ die gleiche Bedeutung wie in Formel I oder II haben, unter Inertgas oder im Vakuum bei Temperaturen zwischen 0 und 250° C mit einem Oxidationsmittel behandelt oder, dass man Tetramercaptoverbindungen der Formel III oder ein Gemisch aus Tetramercaptoverbindungen der Formel III und Dimercaptoverbindungen der Formel IV mit äquimolaren Mengen eines Sulfenylchlorids der Formel V

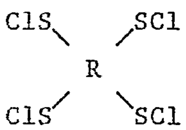

(V)

oder eines Gemisches aus einem Sulfenylchlorid der Formel V und einem Sulfenylchlorid der Formel VI

ClS−R′−SCl (VI),

wobei in den Gemischen der Anteil an Verbindungen der Formeln IV und VI zusammen höchstens 50 Mol% beträgt, in einem organischen Lösungsmittel unter Inertgas oder im Vakuum bei Temperaturen zwischen 0 und 100°C unter Abspaltung von Chlorwasserstoff umsetzt.

Vorzugsweise führt man das Verfahren zur Herstellung der erfindungsgemässen Verbindungen so durch, dass man Tetramercaptoverbindungen der Formel III, gegebenenfalls in Gegenwart von Dimercaptoverbindungen der Formel IV, in einem Lösungsmittel unter Schutzgas zwischen 60 und 200°C mit einem Oxidationsmittel behandelt.

Als Oxidationsmittel verwendet man vorzugsweise Dialkylsulfoxide, $H_2O_2$ oder Jod, insbesondere Dimethylsulfoxid. Das Oxidationsmittel, wie beispielsweise Dialkylsulfoxid, kann auch als Lösungsmittel dienen.

Die Verbindungen der Formel III sind zum Teil bekannt. Beispielsweise wir das 1,2,4,5-Tetramercaptobenzol in Phosphorus and Sulfur, 13, Seite 309 (1982), und das 3,6-Diisopropyl-1,2,4,5-tetramercaptobenzol in Chimia, 40, Seite 200 (1986), beschrieben.

Die verbindungen der Formel III können hergestellt werden,indem man Tetraalkylthioverbindungen der Formel VII

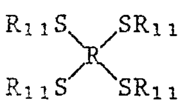

(VII),

worin R die gleiche Bedeutung wie in Formel I hat und $R_{11}$ je ein $C_1$-$C_6$-Alkyl, vorzugsweise Methyl oder Ethyl, bedeutet, Alkalimetalle in niedrigsiedenden primären Aminen zu Verbindungen der Formel III dealkyliert. Ein solches Verfahren ist beispielsweise in J. Amer. Chem. Soc. 82, 2872 (1960) oder in J. Amer. Soc. 84, 1621 (1962) beschrieben.

Die Dimercaptoverbindungen der Formel IV sind bekannt und zum Teil im Handel erhältlich. Verfahren zur Herstellung von Dimercaptoverbindungen werden beispielsweise in Ullmanns Encyklopädie der technischen Chemie, Band 12 (1960), Seiten 286 ff beschrieben.

Sulfenylchloride der Formeln V und VI und Verfahren zu deren Herstellung sind aus Die Makromolekulare Chemie 176, Seiten 9-21 (1975) bekannt.

Als organisches Lösungsmittel setzt man bei der Herstellung der erfindungsgemässen Poly(arylendisulfide) die üblichen Lösungsmittel ein, beispielsweise aromatische Kohlenwasserstoffe, wie Benzol, Toluol oder Xylol oder aliphatische Kohlenwasserstoffe, wie Hexan, Heptan oder Oktan. Gegebenenfalls kann auch das verwendete Oxidationsmittel, wie beispielsweise Dialkylsulfoxid, als Lösungsmittel dienen.

Die erfindungsgemässen Poly(arylendisulfide) stellen in organischen Lösungsmittel unlösliche Polymere dar, die im allgemeinen eine hellgelbe Farbe aufweisen. Die Poly(arylendisulfide) sind in der Regel unschmelzbare Pulver, die sich oberhalb von etwa 300°C exotherm zersetzen.

Wie eingangs erwähnt, lassen sich die erfindungsgemässen Poly(arylendisulfide) durch Behandeln mit Oxidationsmitteln, wie beispielsweise Brom, Metall- oder Metalloidpentahalogeniden, dotieren, wobei elektrisch leitfähige Polymere enthalten werden. Bei der Dotierung der erfindungsgemässen Poly(arylendisulfide) nehmen diese eine dunkle Farbe an. Beispielsweise werden sie beim Dotieren mit Brom dunkelbraun.

Ein weiterer Erfindungsgegenstand sind Poly(arylendisulfide), bestehend aus den Strukturelementen der Formeln I und II oder nur aus dem Strukturelement der Formel I, die durch Behandeln mit Brom, Metall- oder Metall oidpentahalogeniden in dotierter Form vorliegen und deren Verwendung als elektrisch leitende Polymere.

Vorzugsweise verwendet man als Dotierungsmittel für die Poly(arylendisulfide) Brom, $SbF_5$, $SbCl_5$, $AsF_5$

oder $PF_5$, wobei die bevorzugt verwendbaren elektrisch leitenden Polymere erhalten werden.

Bei der Dotierung der Poly(arylendisulfide) verwendet man die Oxidationsmittel im allgemeinen in solchen Mengen, dass mindestens 10 Mol% der wiederkehrenden Struktureinheiten im Polymer in oxidierter Form vorliegen bzw. ein von Brom, einem Metall- oder Metalloidpentahalogenid abgeleitetes Anion enthalten. Poly(arylendisulfide), worin mindestens 20 Mol%, insbesondere mindestens 30 Mol% der wiederkehrenden Struktureinheiten in oxidierter Form vorliegen, stellen bevorzugte, dotierte Poly(arylendisulfide) dar.

Die erfindungsgemässen Poly(arylendisulfide) können undotiert als Isolatoren eingesetzt werden und in dotierter Form in der Elektronik oder Mikroelektronik Anwendung finden, beispielsweise als elektrisch leitende Füller bei der antistatischen Ausrüstung oder der elektromagnetischen Abschirmung von elektronischen Bauteilen, als Elektrodenmaterialien für Batterien, zur Herstellung von Sensoren oder Halbleiterelementen.

Herstellung von Tetramercapto-p-xylol

In einem trockenen Sulfierkolben, versehen mit Rührer und Rückflusskühler, legt man unter $N_2$-Schutzgas 600 ml n-Propylamin und 3,2 g Lithium vor und rührt solange bis die blaue Farbe bestehen bleibt (etwa 30 Minuten). Dann gibt man bei Raumtemperatur (RT) in kleinen Portionen 20 g Tetraethylthio-p-xylol zu und lässt über Nacht rühren. Man kocht anschliessend 1 Stunde (h) am Rückfluss, kühlt dann auf etwa 10°C und gibt 5,89 g Ammoniumchlorid zu (getrocknet bei 100°C im Vakuum). Danach destilliert man n-Propylamin bis auf etwa 100 ml ab, versetzt das Reaktionsgemisch unter guter Kühlung zuerst mit 100 ml entgastem $H_2O$ und dann mit 6N HCl bis zum pH von ~1. Es fällt ein beiges Produkt aus, das unter Luftausschluss 2mal mit 1N HCl gewaschen wird. Man nimmt in Ethanol/$CHCl_3$ (1:1) auf (luftfrei) und dampft ein bis auf etwa 50 ml. Das Rohprodukt mit Schmelzpunkt (Smp.) 190-210°C fällt kristallin aus. Nach zweimaliger Vakuumsublimation bei 170°C Badtemperatur und nachfolgender Umkristallisation in Toluol erhält man 1,58 g Weisse Nadeln mit Smp. 256-258°C. Nach 5 Tagen Lagerung an der Luft zeigt das produkt keinerlei Veränderungen, weder im Smp. noch im IR- oder im H-NMR-Spektrum.

$^1$H-NMR-Spektrum ($CDCl_3$): 2,60 s (6H), 4,17 s (4H)

| | | | | |
|---|---|---|---|---|
| Elementaranalyse: | Berechnet: | C = 40,99 %; | H = 4,30 %; | S = 54,71 %. |
| | Gefunden: | C = 40,87 %; | H = 4,34 %; | S = 54,75 %. |

IR-Spektrum: SH-Bande 2520 (s) $cm^{-1}$.

Bespiel 1: Herstellung eines Polymers aus 1,2,4,5-Tetramercaptobenzol (TMB)

1 g TMB wird unter Schutzgas ($N_2$) in 10 ml entgastem Dimethylsulfoxid (DMSO) gelöst und anschliessend 6 h bei 110°C gerührt. Nach dem Abkühlen auf RT wird auf einem Teflonfilter mit 1,2 µm Porengrösse abfiltriert und mit Aceton und Ether gewaschen. Die Trocknung erfolgt am Hochvakuum bei 100°C. Ausbeute: 0,987 g (100 % der Theorie) gelbes Pulver.

| | | |
|---|---|---|
| Elementaranalyse: | Berechnet: | C = 35,62 %; S = 63,38 %; |
| | Gefunden: | C = 35,48 %; S = 62,43 %. |

IR-Spektrum (KBr): 3050(w), 2530(vw), 1540(m), 1500(w), 1415(s), 1305(m), 1256(w), 1108(w), 1050(s), 887(m), 840(w), 700(w) $cm^{-1}$ (w = schwach, m = mittel, s = stark, vw = sehr schwach).Thermische Analyse: (DSC): exotherme Zersetzung ab 300°C; Maximum bei 350°C. Elektrische Leitfähigkeit $<10^{-12}$ S•$cm^{-1}$ (Isolator).

Beispiel 2:

Man verfährt gleich wie in Beispiel 1 setzt jedoch anstelle von TMB 0,5 g des Tetramercapto-p-xylols ein. Ausbeute: 459 mg (93,5 % der Theorie) Polymer.

| | | | | |
|---|---|---|---|---|
| Elementaranalyse: | Berechnet: | C = 41,71 %; | H = 2,63 %; | S = 55,67 %. |
| | Gefunden: | C = 41,75 %; | H = 2,87 %; | S = 55,63 %. |

IR-Spektrum (KBr): SH-Bande nicht mehr sichtbar. 2920(w), 1510(w), 1440(m), 1380(s), 1310(w), 1220(m), 1200(w), 1125(w), 1025(w), 990(s), 730(vw), 620(w) $cm^{-1}$.Thermische Analyse: Schmelzpunkt etwa 300°C, thermische Zersetzung ab etwa 250°C.

Beispiel 3:

Man verfährt gleich wie in Beispiel 1, setzt jedoch ein Gemisch von 0,515 g TMB und 0,376 g 1,6-Hexandithiol ein.

Ausbeute: 817 mg (~93,2 % der Theorie) gelbes Polymer.

Elementaranalyse für $C_{12}H_{14}S_6$:

| | |
|---|---|
| Berechnet: | C = 41,11 %; H = 4,03 %; S = 54,87 %. |
| Gefunden: | C = 41,18 %; H = 4,10 %; S = 53,46 %. |

IR-Spektrum (KBr): SH-Bande nicht mehr vorhanden. 3045(w), 2920(s), 2855(m), 1542(m), 1500(w), 1457(m), 1415(s), 1303(m), 1255(m), 1220(w), 1106(m), 1050(s), 890(m), 840(w) $cm^{-1}$.Thermische Analyse (DSC): Schmelze oberhalb 265° C.

Beispiel 4:

Man verfährt wie in Beispiel 1, setzt jedoch ein Gemisch aus 0,258 g TMB, 0,293 g Tetramercapto-p-xylol und 0,376 g 1,6-Hexandithiol ein.
Ausbeute: 924 mg (quantitativ) Polymer.

Elementaranalyse für $C_{26}H_{32}S_{12}$:

| | |
|---|---|
| Berechnet: | C = 42,82 %; H = 4,42 %; S = 52,75 %. |
| Gefunden: | C = 42,68 %; H = 4,49 %; S = 51,72 %. |

IR-Spektrum: SH-Bande bei 2550 $cm^{-1}$ noch sehr schwach sichtbar. 3045(w), 2920(s), 2855(m), 1720(w), 1540(m), 1500(w), 1435(m), 1410(s), 1375(m), 1300(m), 1250(m), 1215(m), 1120(w), 1105(m), 1050(s), 985 (m), 890 (m), 835 (m), 720 (m) $cm^{-1}$.Thermische Analyse (DSC): Schmelze oberhalb 235° C.

Anwendungsbeispiele

Beispiel A: Dotierung des Polymers aus Beispiel 1 mit Brom.

Eine Probe von 20-30 mg des Polymers aus Beispiel 1 wird in ein Wägeglas eingewogen und in einen Exsikkator von etwa 1 Liter Inhalt gegeben. Danach wird evakuiert auf ein Feinvakuum von etwa $13^{-3}$ mbar. Anschliessend lässt man Brom einströmen bis ein Partialdampfdruck des Broms von etwa 220 mbar erreicht ist. Man lässt das Oxidationsmittel während 2 h einwirken, verdrängt anschliessend das Brom aus der Apparatur mit trockenem Stickstoff und entfernt schliesslich überschüssiges Brom im Feinvakuum. Die Probe wird anschliessend zu einer Pille gepresst und ein Zweikontaktverfahren elektrisch vermessen. Die elektrische Leitfähigkeit beträgt $10^{-2}$ S•$cm^{-1}$.

Beispiel B:

Man verfährt wie in Beispiel A, setzt jedoch das Polymer aus Beispiel 2 ein. Man erhält ein Pulver mit einer elektrischen Leitfähigkeit von 4,5 $10^{-5}$ S•$cm^{-1}$.

Beispiel C:

Man verfährt wie in Beispiel A, setzt jedoch das Polymer aus Beispiel 3 ein. Man erhält ein Pulver mit der elektrischen Leitfähigkeit von 7 $10^{-6}$ S•$cm^{-1}$.

Beispiel D:

Man verfährt wie in Beispiel A, setzt jedoch das Polymer aus Beispiel 4 ein. Man erhält ein Polymer mit der elektrischen Leitfähigkeit von 2 $10^{-5}$ S•$cm^{-1}$.

**Patentansprüche**

1. In organischen Lösungsmitteln unlösliche Poly(arylendisulfide), enthaltend, bezogen auf die Gesamtmenge der im Poly(arylendisulfid) wiederkehrenden Strukturelemente, 100 bis 50 Mol% des wiederkehrenden Strukturelementes der Formel I

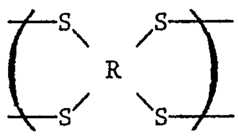 (I)

und 50 bis 0 Mol% des wiederkehrenden Strukturelementes der Formel II

$-\!\!\left(S-R'-S\right)\!\!-$ (II),

worin R einen der folgenden Reste bedeutet

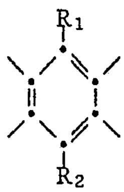 , 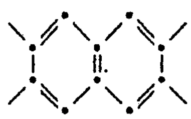 , 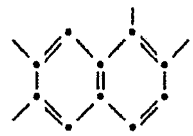 , 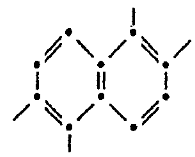 ,

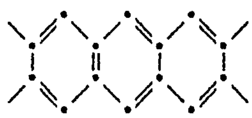 , 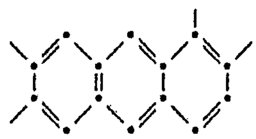 , 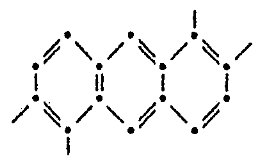 ,

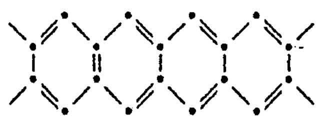 , 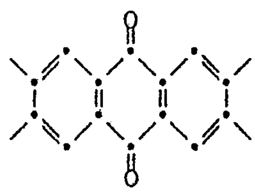 , 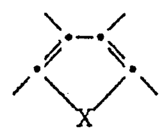 ,

oder 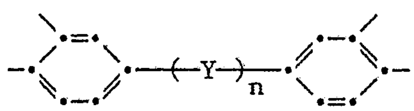 und

R′ für einen Rest der Formeln

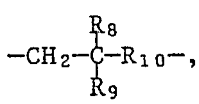, 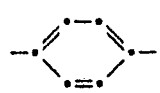 oder 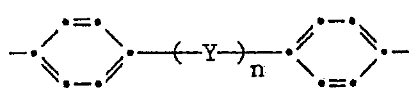

steht, worin $R_1$ und $R_2$ unabhängig voneinander je für -H, $C_1$-$C_{20}$-Alkyl, Aryl mit bis zu 12 C-Atomen, Aralkyl mit bis zu 20 C-Atomen, Alkaryl mit bis zu 20 C-Atomen, -CN, $-OCOR_3$, -OH oder $-SR_4$ stehen, worin $R_3$ und $R_4$ unabhängig voneinander je ein $C_1$-$C_{20}$-Alkyl oder Aryl mit bis zu 2 C-Atomen bedeuten, X für >NH, $>NR_5$, -S- oder -O- steht, worin $R_5$ ein $C_1$-$C_{20}$-Alkyl oder ein Aryl mit bis zu 12 C-Atomen bedeutet, n für Null oder eine Zahl von 1 bis 20 steht, wobei, wenn n für 1 steht, Y einen Rest der Formel

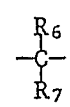 ,

$-SO_2-$ oder Phenylen bedeutet, und, wenn n für eine Zahl von 2 bis 20 steht, Y einen Rest der Formel

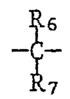

bedeutet, worin $R_6$ und $R_7$ unabhängig voneinander je für -H, $C_1$-$C_{20}$-Alkyl, Aryl mit bis zu 12 C-Atomen, Aralkyl oder Alkaryl mit bis zu 20 C-Atomen stehen, $R_8$ und $R_9$ unabhängig je für ein -H oder $C_1$-$C_6$-Alkyl stehen, $R_{10}$ einen der Reste $-(CH_2)_p-$ oder $-[O-(CH_2)_q]_r-$ bedeutet, worin p für Null oder eine Zahl von 1 bis 18, q für eine zahl von 2 bis 6 und r für Null oder eine Zahl von 1 bis 6 stehen.

2. Poly(arylendisulfide) gemäss Anspruch 1, worin R in Formel I einen Rest der Formeln

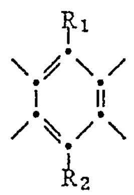 oder 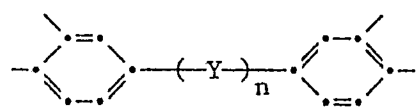 bedeutet,

worin $R_1$ und $R_2$ unabhängig voneinander je für -H, ein $C_1$-$C_4$-Alkyl oder einen Rest $-OCOR_3$ stehen, wobei $R_3$ ein $C_1$-$C_4$-Alkyl bedeutet, n für Null oder die Zahl 1 steht und Y p-Phenylen oder Methylen bedeutet.

3. Poly(arylendisulfide) gemäss Anspruch 1, worin R in Formel I einen Rest der Formeln

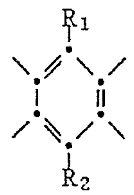 oder 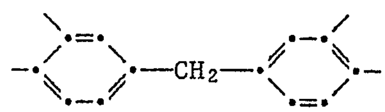 bedeutet,

worin $R_1$ und $R_2$ unabhängig voneinander je für -H, Methyl oder Isopropyl stehen.

4. Poly(arylendisulfide) gemäss Anspruch 1, worin R′ in Formel II einen aromatischen Rest der angegebenen Formeln bedeutet.

5. Poly(arylendisulfide) gemäss Anspruch 1, enthaltend 100 bis 75 Mol% des wiederkehrenden Strukturelementes der Formel I und 25 bis 0 Mol% des wiederkehrenden Strukturelementes der Formel II.

6. Poly(arylendisulfide) gemäss Anspruch 1, enthaltend 100 Mol% des widerkehrenden Strukturelementes der Formel I.

7. Verfahren zur Herstellung von Poly(arylendisulfiden) gemäss Anspruch 1, dadurch gekennzeichnet, dass man entweder Tetramercaptoverbindungen der Formel III

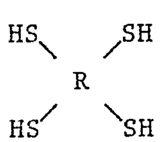 (III)

oder ein Gemisch aus einer Tetramercaptoverbindung der Formel III mit einer darin bis zu 50 Mol% enthaltenen Dimercaptoverbindung der Formel IV

HS−R′−SH (IV),

worin R und R′ die gleiche Bedeutung wie in Formel I oder II gemäss Anspruch 1 haben, unter Inertgas oder im Vakuum bei Temperaturen zwischen 0 und 250°C mit einem Oxidationsmittel behandelt oder, dass man Tetramercaptoverbindungen der Formel III oder ein Gemisch oder Tetramercaptoverbindungen der Formel III und Dimercaptoverbindungen der Formel IV mit äquimolaren Mengen eines Sulfenylchlorids der Formel V

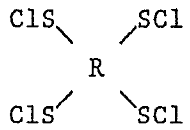

(V)

oder eines Gemisches aus einem Sulfenylchlorid der Formel V und einem Sulfenylchlorid der Formel VI

ClS—R′—SCl (VI),

wobei in den Gemischen der Anteil an Verbindungen der Formeln IV und VI zusammen höchstens 50 Mol% beträgt, in einem organischen Lösungsmittel unter Inertgas oder im Vakuum bei Temperaturen zwischen 0 und 100°C unter Abspaltung von Chlorwasserstoff umsetzt.

8. Verfahren gemäss Anspruch 7, dadurch gekennzeichnet, dass man Tetramercaptoverbindungen der Formel III in einem Lösungsmittel unter Schutzgas bei Temperaturen zwischen 60 und 200°C mit einem Oxidationsmittel behandelt.

9. Verfahren gemäss Anspruch 7, dadurch gekennzeichnet, dass man als Oxidationsmittel Sulfoxide, $H_2O_2$ oder Jod verwendet.

10. Verfahren gemäss Anspruch 9, dadurch gekennzeichnet, dass man als Oxidationsmittel Dimethylsulfoxid verwendet.

11. Poly(arylendisulfide) gemäss Anspruch 1, die durch Behandeln mit Brom, Metall- oder Metalloidpentahalogeniden in dotierter Form vorliegen.

12. Poly(arylendisulfide) gemäss Anspruch 1, die durch Behandeln mit Brom, $SbF_5$, $SbCl_5$, $AsF_5$ oder $PF_5$ in dotierter Form vorliegen.

13. Verwendung der Poly(arylendisulfide) gemäss Anspruch 1 in dotierter Form als elektrisch leitende Polymere.